# EUROPEAN PATENT SPECIFICATION

(11) **EP 3 750 015 B1**
(45) Date of publication and mention of the grant of the patent: **17.08.2022**
(21) Application number: 19709122.6
(22) Date of filing: 08.02.2019
(51) Int. Cl.: G05B 19/418, G05B 19/4065

(54) **AUTOMATIC MACHINE FOR THE PRODUCTION OR PACKAGING OF SMOKING, SANITARY, FOODSTUFF, OR PHARMACEUTICAL PRODUCTS AND CORRESPONDING CONTROL METHOD**
AUTOMATISCHE MASCHINE FÜR DIE HERSTELLUNG ODER VERPACKUNG VON RAUCH-, HYGIENE-, LEBENSMITTEL- ODER PHARMAZEUTISCHEN PRODUKTEN UND ENTSPRECHENDES STEUERUNGSVERFAHREN
MACHINE AUTOMATIQUE POUR LA PRODUCTION OU LE CONDITIONNEMENT DE PRODUITS À FUMER, SANITAIRES, ALIMENTAIRES OU PHARMACEUTIQUES ET PROCÉDÉ DE COMMANDE CORRESPONDANT

(30) Priority: 08.02.2018 IT 201800002485
(43) Date of publication of application: 16.12.2020
(73) Proprietor: G.D Società per Azioni, 40133 Bologna (IT)
(72) Inventor: MARTIGNANI, Davide, 40133 Bologna (IT); BARBACCIA, Vincenzo, 40137 Bologna (IT); BAGOLINI, Paolo, 40033 Casalecchio di Reno (BO) (IT); BERGONZONI, Tiziana, 41013 Castelfranco Emilia (MO) (IT); FEDERICI, Luca, "deceased" (IT)
(74) Representative: Maccagnan, Matteo
(86) International application number: PCT/IB2019/051036
(87) International publication number: WO 2019/155420

(56) References cited:
- EP-A2- 1 532 873
- US-A1- 2002 094 207
- US-A1- 2003 014 150
- US-A1- 2006 129 269
- US-A1- 2012 075 079
- US-A1- 2015 045 929
- US-A1- 2018 012 270

## Description

### TECHNICAL FIELD

The present invention relates to an automatic machine for the production or packaging of smoking, sanitary, foodstuff, or pharmaceutical products and to a corresponding method of control.

The present invention finds advantageous application to a packing machine that produces packets of cigarettes, to which the following description will make explicit reference without any loss of generality.

### PRIOR ART

A packing machine for producing packets of cigarettes comprises a large number of components subjected to inevitable wear during operation of the packing machine. Essentially, all the components of a packing machine must be periodically subjected to maintenance, which, depending on the type of component and level of wear, can be simply cleaning, overhauling, calibration, partial replacement (i.e. only some parts), or complete replacement.

The number of operating hours of a component is used to establish the need and type of maintenance operation for that component. The number of operating hours of the components of an automatic machine is determined by reading the automatic machine's hour meter, which measures the overall number of hours of operation of the automatic machine, and taking into account when the component was installed for the first time in the automatic machine.

This method is effective for components that once installed on the automatic machine are never replaced until they reach the end of their working life. Nevertheless, a certain number of the automatic machine's components are related to the format of the cigarettes to be packed and/or the format of the packets to be made and are thus cyclically replaced during format changes. For these format-related components, it is complicated and arduous to determine the actual hours worked with precision and therefore the scheduling of their maintenance is difficult. Patent application US2006129269A1 discloses a process for using a data memory device in conjunction with an item of tooling such as an injection mold; the tooling is fixedly coupled with a memory device for storing information such as tool identification information, optimal and actual operating parameters, cycle count, and similar information useful for the tracking, use, maintenance, and repair of the tooling.

### DESCRIPTION OF INVENTION

The object of the present invention is to provide an automatic machine for the production or packaging of smoking, sanitary, foodstuff, or pharmaceutical products and a corresponding method of control, this automatic machine and method of control being devoid of the above-described drawbacks and, at the same time, of straightforward and inexpensive implementation.

In accordance with the present invention, an automatic machine for the production or packaging of smoking, sanitary, foodstuff, or pharmaceutical products and a corresponding method of control are provided, as claimed in the appended claims.

The scope of the present invention is defined by the claims.

### BRIEF DESCRIPTION OF DRAWINGS

The present invention will now be described with reference to the accompanying drawings, which illustrate a non-limitative embodiment, in which:
- Figure 1 is a front perspective view of a packet of cigarettes provided with two rigid containers, one inside the other, and in a closed configuration;
- Figure 2 is a rear perspective view of the packet of cigarettes in Figure 1 in a closed configuration;
- Figure 3 is a front perspective view of the packet of cigarettes in Figure 1 in an open configuration;
- Figure 4 is a frontal schematic view of a packing machine that produces the packet of cigarettes in Figure 1 and is made in accordance with the present invention;
- Figure 5 is an enlarged view of a detail in Figure 4;
- Figure 6 is a schematic view of a transponder and a transmission device of the packing machine in Figure 4;
- Figure 7 is a perspective view of a protection casing of the packing machine in Figure 4;
- Figures 8-11 are four schematic and sectional views of respective components of the packing machine in Figure 4, each of which is equipped with a transponder;
- Figure 12 is a schematic view of part of the contents of a programmable memory of the transponder in Figure 6;

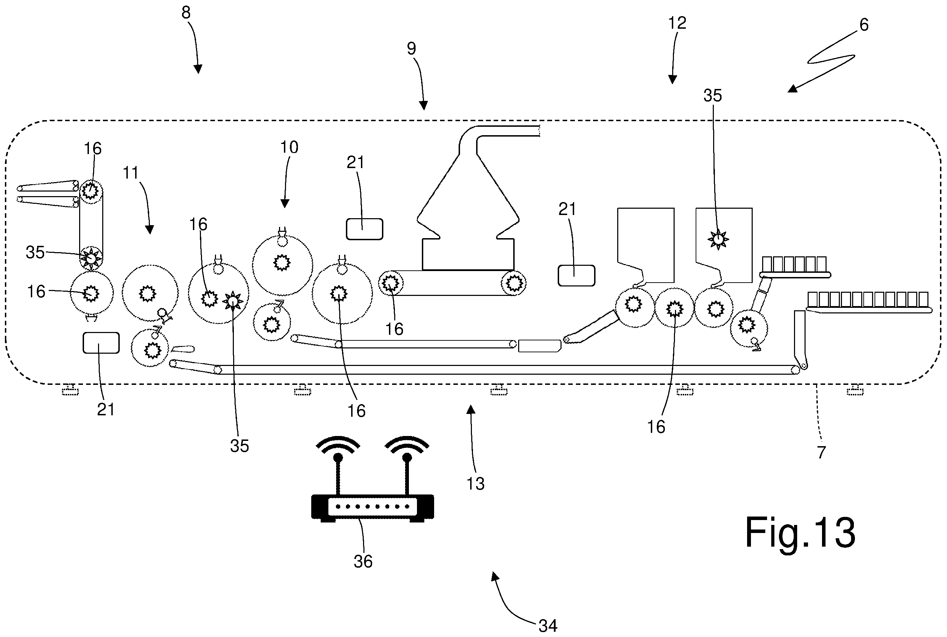

- Figure 13 is a frontal schematic view of the packing machine in Figure 6 with a localization system highlighted; and
- Figures 14 and 15 are two schematic and sectional views of respective components of the packing machine in Figure 13, each of which is equipped with a transponder and a marker element of the localization system.

### PREFERRED EMBODIMENTS OF THE INVENTION

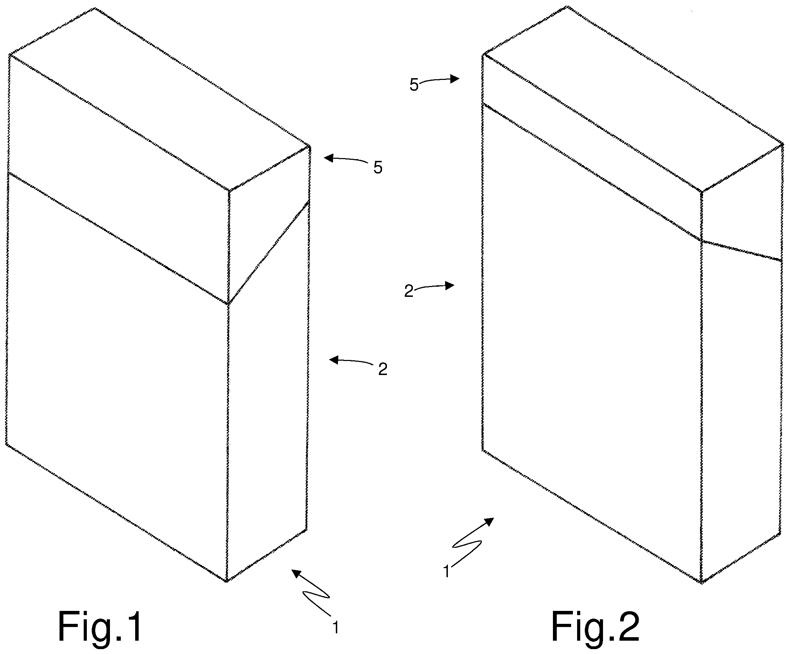

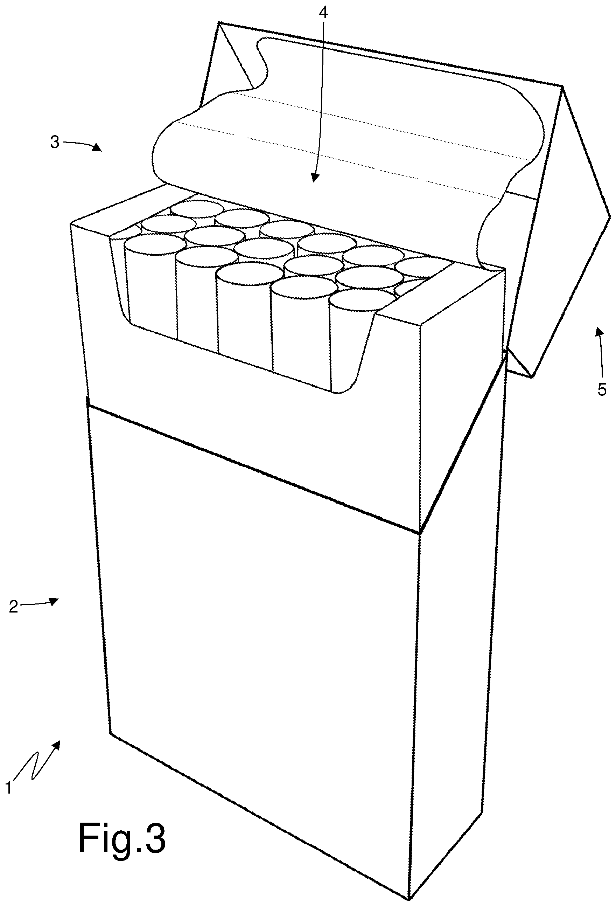

In Figures 1, 2 and 3 reference numeral 1 indicates, as a whole, a rigid packet of cigarettes. The packet of cigarettes 1 comprises an outer container 2, which is made of paperboard or cardboard, has an open-box shape, houses an internal wrapper 3 containing a group of cigarettes 4, and is provided with a hinged lid 5.

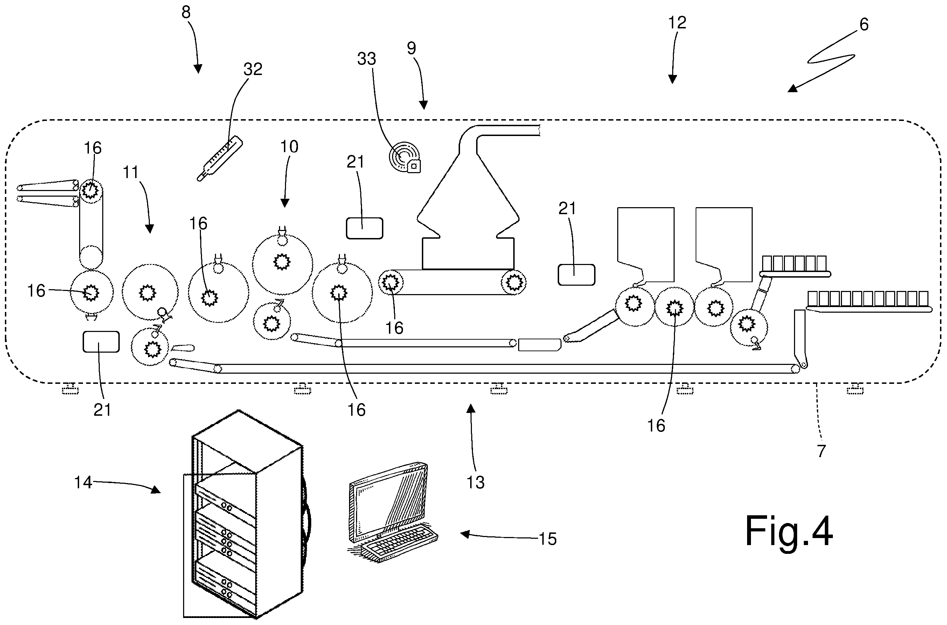

In Figure 4, reference numeral 6 indicates, as a whole, a packing machine that is designed to produce the packet of cigarettes 1.

The packing machine 6 comprises a frame 7 that stands on the floor and supports a processing line 8 along which the processing (i.e. the packing) of the cigarettes (which constitute the product processed by the processing line 8) takes place. The following are arranged along the processing line 8: a forming unit 9 where the groups of cigarettes 4 are formed in succession, a wrapping unit 10 where a wrapping sheet (usually metalized paper) is folded around each group of cigarettes 4 to form the corresponding internal wrapper 3, and a wrapping unit 11 where a blank (usually cardboard and already provided with pre-weakened fold lines) is folded around each internal wrapper 3 to form the corresponding outer container 2 fitted with the hinged lid 5. A feed unit 12 that feeds the wrapping sheets in succession is coupled to wrapping unit 10 to form the internal wrappers 3, while a feed unit 13 that feeds the blanks in succession is coupled to wrapping unit 11 to form the outer containers 2.

The packing machine 6 comprises a plurality of components (for example, linear conveyors, rotary conveyors, gluing machines, fixed and mobile folding machines, control members, support heads, pulleys, belts, pushers, pockets for the groups of cigarettes 4, electronic circuit boards, electric motors, electric actuators, pneumatic valves, ...),which are distributed along the processing line 8 so as to make up the processing line 8 (i.e. to make up the various units 9-13 that form the processing line 8). In particular, each component is stably installed on the frame 7 in a respective predetermined nominal position (i.e. in a predetermined design position in which the component can correctly perform its function).

In addition, the packing machine 6 comprises a control unit 14, which controls the operation of the packing machine 6 and therefore the processing line. Normally, the control unit 14 is provided with a user interface device 15, which is equipped with a screen and a data input device (keyboard and/or pointing system).

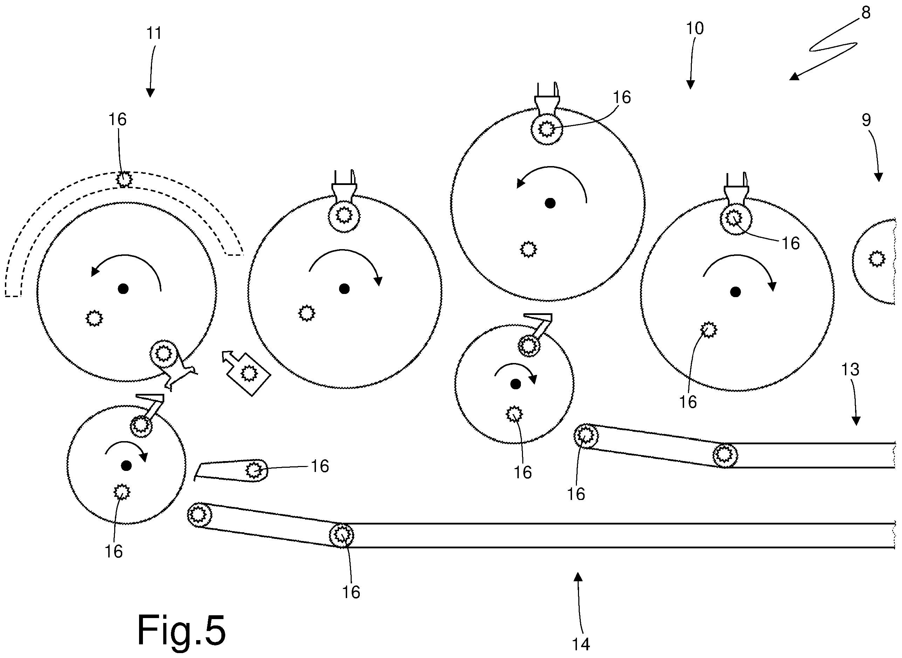

As shown in Figures 4 and 5, the packing machine 6 comprises a plurality of transponders 16, each of which is installed (generally in an inseparable or destructively removable manner) on a corresponding component. The transponders 16 can be coupled to any type of component, from larger components (even the frame 7 or the wrapping wheels) to smaller components (gluing machines, support heads installed on the wrapping wheels, pulleys, flexible belts, pockets for the groups of cigarettes 4, ...). In general, each transponder 16 is fastened in an inseparable (or destructively removable) manner to the corresponding component in such a way that in order to remove the transponder 16 from the component it is necessary to destroy the transponder 16; in other words, a transponder 16 is never separated from the corresponding component, except in the event of malfunctioning of the transponder 16 (in this case, the old malfunctioning transponder 16 is destructively "*wrenched*" from the component and replaced with a new, correctly functioning transponder 16).

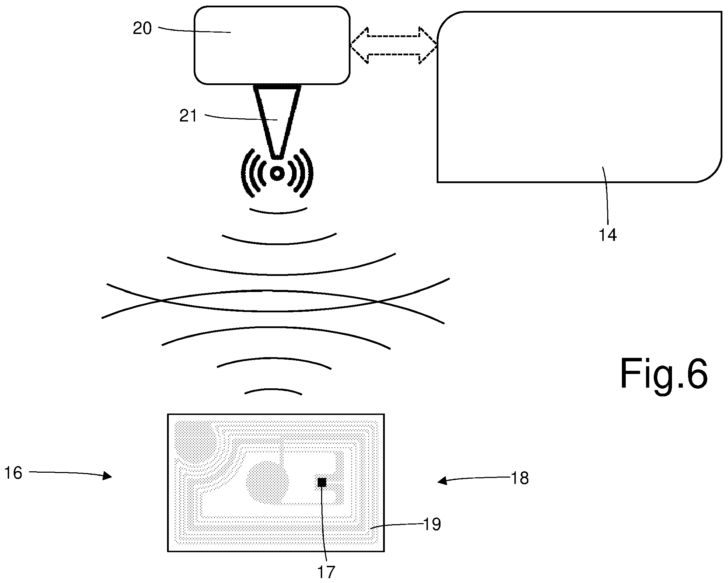

As shown in Figure 6, each transponder 16 comprises a programmable memory 17, designed to contain solely a series of data of the corresponding component, and a wireless (i.e. which exploits electromagnetic waves) transmission device 18, which is designed to send and receive the data contained in the programmable memory 17 and comprises, amongst other things, an antenna 19. The programmable memory 17 of each transponder 16 is designed to contain solely a series of data of the corresponding component and therefore is not suitable for containing production process data or different data other than the data of the corresponding component. In this regard, it is important to specify that each transponder 16 is not connected to any sensor and therefore is not able to receive a reading of any sensor (among other things, the reading of a sensor is a production process datum and therefore could not in any case be stored in the programmable memory 17 of a transponder 16). In other words, each transponder 16 is an intelligent electronic label, is only capable of radio frequency communication, and is unable of being physically connected (i.e. via a solid connection element such as an electrical copper wire) to any other element for non-radiofrequency communication with the physical element.

According to a preferred embodiment, the transponders 16 are passive (i.e. without their own electric power source), i.e. they are intelligent electronic labels that (unless equipped with an internal battery) remain "off" until they enter an energy field produced by a reader (when this happens, a transponder 16 becomes charged and starts to transmit its data and, in the absence of an energy field, the transponder 16 immediately switches off); these types of transponder 16 are the most inexpensive and are generally able to communicate at distances of less than 10 metres. Alternatively, the transponders 16 can be semipassive, their method of communication with the reader being identical to that of passive transponders 16; in this case, the programmable memory 17 is much larger than that of passive transponders and consequently needs a permanent power supply.

As shown in Figure 6, the packing machine 6 comprises a wireless transmission device 20 (i.e. that exploits electromagnetic waves), which is connected to the control unit 14, is designed to communicate with the transmission device 18 of each transponder 16 and is arranged in a fixed position (i.e. installed on the frame 7 of the packing machine 6). In particular, transmission device 20 comprises at least one antenna 21 that emits and receives radio waves; according to the embodiment shown in Figure 4, transmission device 20 (schematically shown in Figure 6) comprises a plurality (for example three) antennas 21, which are arranged in different positions on the frame 7 of the packing machine 6 to ensure adequate coverage of the entire packing machine 6. According to a preferred, but non-limitative embodiment, transmission device 20 comprises a single common communications device that, in use, uses the various antennas 21 in sequence to dialogue with the transmission devices 18 of all the transponders 16 in sequence; in other words, the common communications device connects in sequence with one antenna 21 at a time to interrogate the transmission devices 18 of the transponders 16 of the components located within the working area of that antenna 21.

Each transponder 16 is an intelligent electronic label and is only capable of communicating in radio frequency and only in response to an interrogation generated by transmission device 20; i.e., no transponder 16 can initiate radio frequency communication with transmission device 20 under its own initiative, but can only respond to an interrogation generated by transmission device 20.

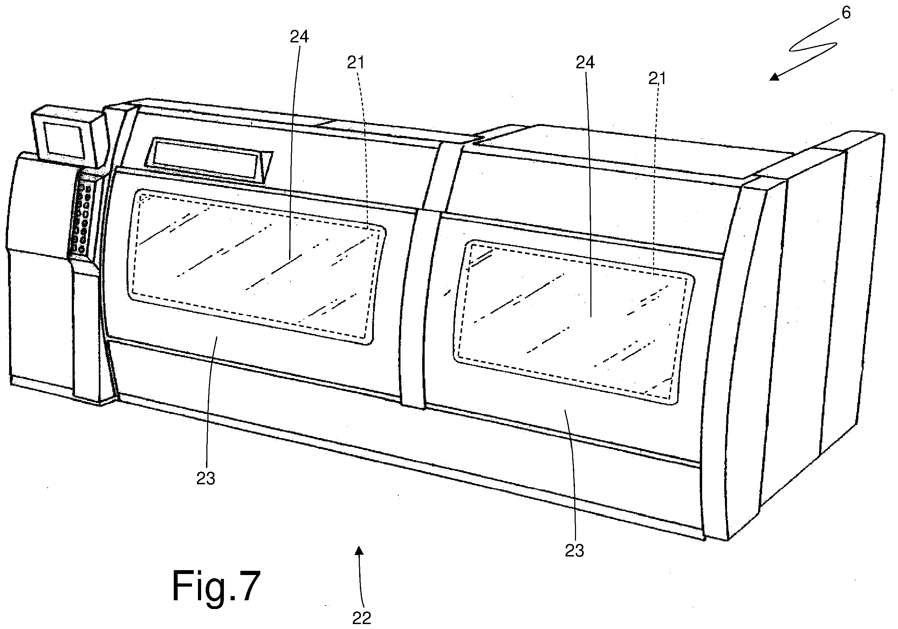

As shown in Figure 7, the automatic machine 6 comprises a protection casing 22 (shield or case), which is coupled to the automatic machine 6 to completely cover a front side of the automatic machine 6, so as to avoid contact with moving parts when the automatic machine 6 is in operation. The protection casing 22 comprises doors 23 that are movable between a closed position (shown in Figure 7) where access to the front side of the automatic machine 6 is prevented, and an open position (not shown) where access to the front side of the automatic machine 6 is permitted; obviously, the automatic machine 6 can only be set in operation when the doors 23 of the protection casing 22 are in the closed position (shown in Figure 7). Each door 23 of the protection casing 22 has at least one window 24 fitted with a transparent panel that enables seeing the front side of the automatic machine 6 even when the doors 23 of the protection casing 22 are in the closed position (shown in Figure 7). According to a possible embodiment shown in Figure 7, the antennas 21 of transmission device 20 (schematically shown in Figure 6) are installed (fixed) on the protection casing 22 and, in particular, are installed (fixed) on the doors 23 of the protection casing 22 so as to be positioned along the edges of the windows 24. In other words, the antennas 21 have an annular shape and surround corresponding windows 24 of the doors 23. Alternatively, the antennas 21 could be fixed to the doors 23 of the protection casing 22 (or also fixed parts of the protection casing 22) next to the windows 24 (i.e. above, below or to the side of the windows 24). In this way, the antennas 21 can be large (consequently with a large range) and can be arranged in close proximity to the transponders 16 without simultaneously entailing any extra occupied space.

Each transponder 16 has a flat shape (especially when it is a passive transponder, which is generally shaped like a label).

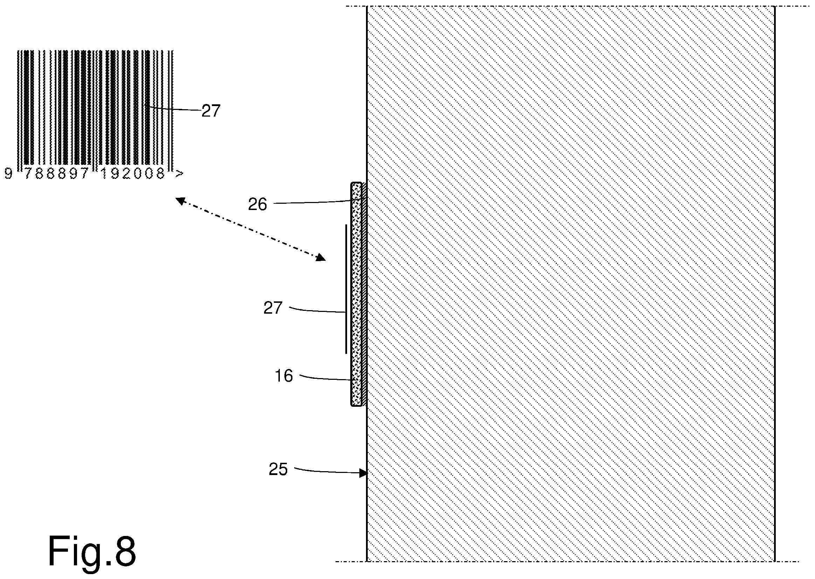

As shown in Figure 8, at least a part of the transponder 16 is glued directly on the outer surface 25 of the corresponding components, i.e. a transponder 16 is fixed to the outer surface 25 of a corresponding component by the interposition of a permanent glue 26 (generally very strong); this (simpler and inexpensive) solution is preferable when the component is relatively small (i.e. having a size similar to that of the transponder 16) and is made of a plastic material (i.e. a material "*transparent*" the radio waves), but can still be used in any situation (i.e. even with large and entirely metal components). The permanent glue 26 that binds the transponder 16 to the outer surface 25 of a corresponding component can be applied in a (more or less dense) fluid form or be applied in the form of a double-sided adhesive tape. According to a possible embodiment shown in Figure 8, the outer surface (i.e. visible from the outside) of the transponder 16 is provided with an mark 27 that indicates the identification code and/or function of the transponder 16 in a graphical form (i.e. optically readable). The mark 27 could reproduce the identification code of the transponder 16 in the form of a bar code, a QR code and/or an alphanumeric code. By way of example, the mark 27 could be obtained by ink printing or laser engraving. The function of the mark 27 is to enable an operator to optically detect (with their own eyes and/or via an optical reader) the identity and/or function of the transponder 16.

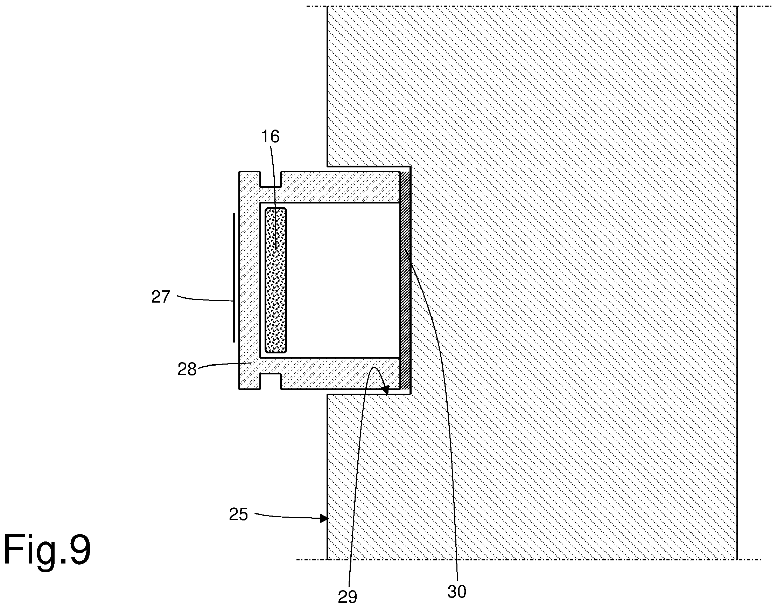

As shown in Figures 9, 10 and 11, in some components, a container 28 made of a plastic material (i.e. a material "*transparent*" to radio waves) is used, which is rigidly connected to the component and internally houses the transponder 16. Each container 28 generally has an open-box shape and thus has an open end through which the transponder 16 is inserted; the open end of each container 28 is turned to face the inside of the corresponding component so as to be closed by the component itself. According to a preferred, but not limitative embodiment shown in Figures 9, 10 or 11, the component has a blind hole 29 in which the container 28 is inserted and which partially protrudes outside of the blind hole 29; the transponder 16 is placed in a part of the container 28 that protrudes outside the blind hole 29 in such a way that the transponder 16 is located at a certain distance from the component and therefore the transmission of the transmission device 18 of the transponder 16 is less disturbed by the presence of the component. The container 28 can be glued inside the blind hole 29 by a permanent glue 30 (generally very strong); alternatively or in addition, the container 28 could be interference fitted inside the blind hole 29 (i.e. the container 28 is forcefully pushed inside the blind hole 29 causing an elastic or plastic deformation of the container 28). As shown in Figure 9, the part of the container 28 that protrudes outside the blind hole 29 could have an annular groove to firmly grip the container 28 with pliers or a similar tool and then extract the container 28 from the hole 29 (an operation that generally results in destroying the container 28 and the transponder 16) when it necessary to replace the transponder 16 housed in the container 28.

To avoid excessively unbalancing a rotating component, two (or more) matching blind holes 29, symmetrical with respect to the axis of rotation, could be made in the rotating component: one blind hole 29 is used to house a container 28 fitted with a transponder 16, while the other blind hole 29 (which only has a mechanical balancing function) can be left open or filled with an empty container 28.

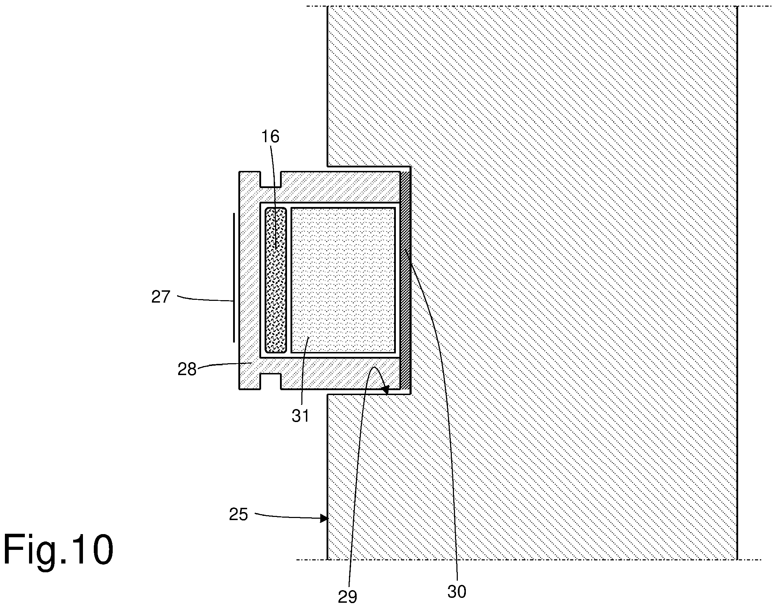

According to a possible embodiment shown in Figure 10, at least one metal material body 31 is placed inside the container 28 in close proximity to the transponder 16 for the purposes of increasing the transmission and reception power of the transmission device 18 of the transponder 16. In other words, in this embodiment the transponder 16 is of the "*RFID on Metal"* type and requires being placed against a metal body 31.

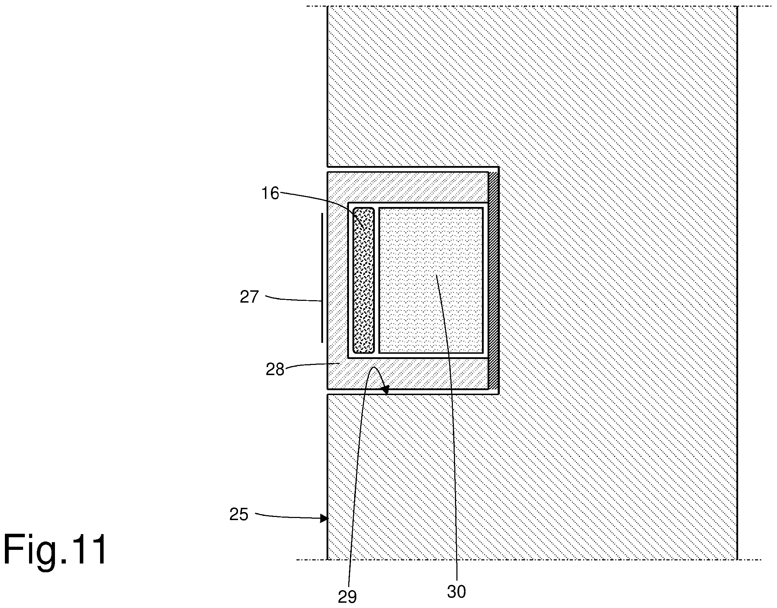

In the alternative embodiment shown in Figure 11, the container 28 that houses a transponder 16 is completely inserted in the corresponding blind hole 29 made in a component and therefore does not protrude from the outer surface 25 of the component (i.e. the container 28 is flush with the outer surface 25 of the component).

According to a possible embodiment shown in Figure 4, the automatic machine 6 comprises a temperature sensor 32, which detects the temperature in the automatic machine 6 and is connected to the control unit 14, and an acceleration sensor 33, which is integral with the frame 7, detects the accelerations to which the frame 7 is subjected and is connected to the control unit 14. According to other embodiments that are not shown, the automatic machine 6 comprises a different number and/or composition of sensors that are designed to measure a physical quantity (temperature, acceleration, humidity, ...) correlated to the stresses (thermal, mechanical, environmental, ...) to which the components of the processing line 8 are subjected; in particular, the sensors could be installed on the frame 7 of the automatic machine 6 (to be common to all the components) or could also be installed on specific components (to be dedicated to the corresponding components).

Each transponder 16 is paired to a corresponding component of the processing line 8 and the memory 17 of each transponder 16 contains a series of data related to the component: some of this data is related (as better described hereinafter) to the structure of the component and is therefore never changed or only rarely changed (for example, following overhaul or update operations) while the other data is related to (as better described hereinafter) the operating life of the component (i.e. contains a record of events of the component's operating life) and is therefore cyclically updated (for example, every minute) during operation of the automatic machine 6. In other words, during operation of the automatic machine 6, the control unit 14 changes the content of the memory 17 of the transponder 16, via the transmission device 20, to update the events of the corresponding component's operating life.

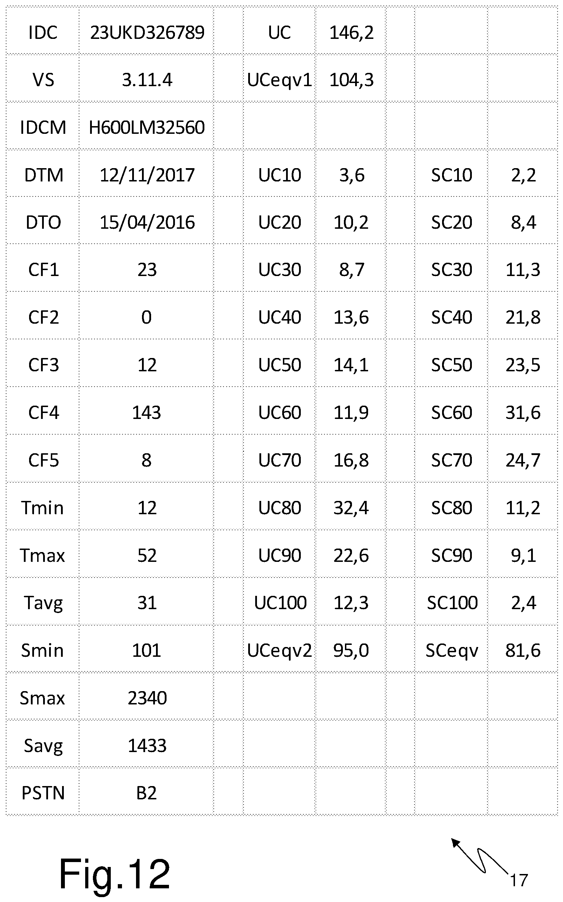

As shown in Figure 12, the memory 17 of each transponder 16 contains a univocal identifying code IDC of the corresponding component that serves to identify the component with certainty; obviously, this datum is assigned to the component at its time of manufacture and is never changed.

The memory 17 of each transponder 16 contains a version code VS that indicate the version of the corresponding component, i.e. it indicates the update level of the component; this datum is modified following an update operation on the component.

The memory 17 of each transponder 16 contains an univocal identifying code IDCM of the automatic machine 6 (which serves to univocally identify the automatic machine 6) in which the corresponding component is installed; this datum is modified every time the component is installed in a new automatic machine 6 and indicates the last automatic machine 6 where the component was used. In other words, the control unit 14 writes the univocal identifying code IDCM of the automatic machine 6 in the memory 17 of a transponder 16 when the corresponding component is installed for the first time on the automatic machine 6. According to a different and perfectly equivalent embodiment, multiple identifying codes IDCM could be provided for storing not only the last automatic machine 6 where the component was used, but the last five (ten, fifteen, twenty, ...) automatic machines 6 where the component was used; an hour counter could also be associated with each identifying code IDCM to indicate the component's overall number of hours of use on the corresponding automatic machine 6.

The memory 17 of each transponder 16 contains a first installation date DTM of the corresponding component on the automatic machine 6; this datum is modified every time that the component is installed in a new automatic machine 6 and indicates the date when the component was installed for the first time on the last automatic machine 6 where the component was used. In other words, the control unit 14 writes the first installation date DTM in the memory 17 of a transponder 16 when the corresponding component is installed for the first time on the automatic machine 6. According to a different and perfectly equivalent embodiment, multiple first installation dates DTM could be provided for storing not only the last automatic machine 6 where the component was used, but the last five (ten, fifteen, twenty, ...) automatic machines 6 where the component was used.

The memory 17 of each transponder 16 contains a last overhaul date DTO that indicates the last time the corresponding component was subjected to overhaul; this datum is modified following an overhaul operation on the component.

According to a possible, but not limitative embodiment, the memory 17 of some transponders 16 contains configuration parameters CF1-CF5 of the corresponding component. These configuration parameters CF1-CF5 indicate the optimal method of using the corresponding component, taking into account the specificity of the component (due to the inevitable constructional tolerances, wear and the past history of the component) and are normally determined experimentally during use of the component. In other words, during the component's usage in the automatic machine 6, optimal values can be found for the configuration parameters CF1-CF5, which are written to the memory 17 of the corresponding transponder 16 so they can saved and then reused in the future. Obviously, configuration parameters CF1-CF5 do not exist for all components, but only the more complex ones that have more adjustment possibilities. In use, the control unit 14 reads the optimized values of the configuration parameters CF1-CF5 from the memory 17 of the transponder 16 of the corresponding component and uses the optimized values to control the component or display the optimized values for manually adjusting the component; in other words, the optimized value of a configuration parameter CF1-CF5 can be used directly by the control unit 14 in the control processes (for example, the temperature to which a hot gluer should be heated, or a corrective value with which to correct a measurement reading, ...) or can be used by an operator for manual adjustment (for example, an angle of inclination at which to set the component, a tightening torque for tightening a screw, ...).

According to a possible, but not limitative embodiment shown in Figure 12, the memory 17 of some transponders 16 contains stress data Tmin, Tmax, Tavg, Smin, Smax and Savg correlated to the physical quantities (temperatures and accelerations in the embodiment shown) measured by the sensors 32 and 33. In the non-limitative embodiment shown in Figure 12, the memory 17 of some transponders 16 contains the minimum temperature Tmin, the maximum temperature Tmax and the average temperature Tavg at which the corresponding component has operated, and also contains the minimum acceleration level Smin (vibrations), maximum acceleration level Smax (vibrations), and average acceleration level Savg (vibrations) at which the corresponding component has operated. In use, the control unit 14 cyclically reads the sensors 32 and 33 and, if necessary, updates the stress data Tmin, Tmax, Tavg, Smin, Smax and Savg in the memory 17 of each transponder 16.

As previously mentioned, the sensors 32 and 33 can be related to the entire packing machine 6 and are therefore installed on the frame 7 of the packing machine 6, or can be specific for one component (or a limited group of components) and are therefore installed on a component; typically, the temperature sensor 32 is related to the entire packing machine 6 as the ambient temperature between nearby components does not vary significantly, while the acceleration sensor 33 can be related to a specific component (i.e. a number of different acceleration sensors 33 can be provided) as the acceleration level (vibrations) can change significantly from component to component.

According to a possible, but not limitative embodiment shown in Figure 12, the memory 17 of some transponders 16 contains a plurality of stress counters SC10-SC100 indicating the actual working time of the corresponding component at different values taken by the physical quantity measured by the temperature sensor 32 or the acceleration sensor 33; in the example shown in Figure 12, ten stress counters SC10-SC100 are provided, indicating the actual working time (normally measured in hours) of the corresponding component at 10%, 20%, 30%, ..., 90% and 100% of the maximum stress. According to a possible embodiment shown in Figure 12, an equivalent stress counter SCeqv is also provided, which contains a value calculated, for example, by means of a linear combination of the ten stress counters SC10-SC100 (with obviously different weights) and constitutes an equivalent working time (normally measured in hours) of the component that takes into account the effective stress to which the component was subjected during use; obviously, in the calculation of the equivalent stress counter SCeqv, the actual working time at low stress levels (i.e. stress counters SC10-S30) counts less than the actual working time at high stress levels (i.e. stress counters SC70-SC100), while the weights with which the ten stress counters SC10-SC100 are combined are generally determined from theoretical calculations and, if necessary, experimentally refined (i.e. by means of experimental verification).

It is clear that the stress counters SC10-SC100 can be useful for certain components that are more complex (therefore high-cost) and more stress sensitive, while they are not useful for other components that are simpler (therefore low-cost) and less stress sensitive; in addition, some components might be more sensitive to mechanical stress (and so it makes sense to keep track of the accelerations measured by the acceleration sensor 33) while other components might be more sensitive to heat stress (and so it makes sense to keep track of the temperatures measured by the temperature sensor 32). According to the embodiment shown in Figure 12, the memory

17 of each transponder 16 contains an additional use counter UC indicating the actual working time (normally measured in hours) of the corresponding component; in use, when the processing line 8 is working to process the products (i.e. the groups of cigarettes 4), the control unit 14 cyclically modifies the content of the memory 17 of each transponder 16 to increase the additional use counter UC of the corresponding component.

According to a possible, but not limitative embodiment shown in Figure 12, the memory 17 of each transponder 16 contains an equivalent use counter UCeqv1 that indicates the equivalent working time (normally measured in hours) of the corresponding component and is increased not with the actual operating time (unlike the use counter UC), but with an equivalent operating time that is established depending on the actual operating speed of the packing machine 6. In other words, a nominal operating speed is provided that represents the maximum operating speed achievable by the processing line 8 (i.e. by the packing machine 6) and the control unit 14 is designed to determine an actual operating speed at which the processing line 8 (i.e. the automatic machine 6) is working; the control unit 14 increases the equivalent use counter UCeqv1 of the corresponding component by an amount that depends on the elapsed amount of time and the ratio between the actual operating speed and the nominal operating speed. For example, the control unit 14 determines a wear factor that depends on the actual operating speed and increases the equivalent use counter UCeqv1 of the corresponding component by an amount equal to the product of the elapsed amount of time and the wear factor (i.e. the lower the actual operating speed, the lower the increase in the equivalent use counter UCeqv1 for the same elapsed operating time).

As shown in Figure 12, eventually in combination with the equivalent use counter UCeqv1, the memory 17 of the transponders 16 contains a plurality of use counters UC10-UC100 indicating the actual working time (normally measured in hours) of the corresponding component at different operating speeds ranging from zero to the nominal operating speed, wherein the nominal operating speed represents the maximum operating speed that can be reached by the processing line. In the example in Figure 12, ten use counters UC10-UC100 are provided indicating the actual working time (normally measured in hours) of the corresponding component at 10%, 20%, 30%, ..., 90% and 100% of the nominal operating speed. According to a possible embodiment shown in Figure 12, an equivalent use counter UCeqv2 is also provided that contains a value calculated, for example, by means of a linear combination of the ten use counters UC10-UC100 (with obviously different weights) and constitutes an equivalent working time (normally measured in hours) of the component that takes into account the actual operating speeds maintained by the component during use; obviously, in the calculation of the equivalent use counter UCeqv2, the actual working time at low operating speeds (i.e. use counters UC10-S30) counts less than the actual working time at high operating speeds (i.e. use counters UC70-UC100), while the weights with which the ten use counters UC10-UC100 are combined are generally determined from theoretical calculations and, if necessary, experimentally refined (i.e. by means of experimental verification).

According to a possible, but not limitative embodiment shown in Figure 12, the memory 17 of each transponder 16 contains a position code PSTN that indicates the actual position of the corresponding component inside the packing machine 6, i.e. it indicates where the corresponding component is located inside the packing machine 6.

The position code PSTN is generally used for all components that can be installed in different positions on the packing machine 6. For example, the packing machine 6 could use three identical gluing devices that are installed in three different positions and it is evident that each gluing device could be indifferently installed in each of the three different positions; in this case, the position code PSTN indicates in which of the three different positions a certain gluing device is effectively installed. For example, each wrapping wheel of the packing machine 6 comprises a plurality of matching heads (for example, from six to sixteen heads for each wrapping wheel) and a head can be installed in series of different positions in a wrapping wheel; in this case, the position code PSTN indicates in which position (for example position 1, 2, 3, ..., 11, 12) a certain head has effectively been installed in the corresponding wrapping wheel. For example, the packing machine 6 could use a series of identical electric motors that are installed in different positions and it is evident that each electric motor could be indifferently installed in each of the possible different positions; in this case, the position code PSTN indicates in which of the possible different positions a certain electric motor has effectively been installed. The knowledge of the exact position of a certain component in the packing machine 6 (obviously when the component is installable in at least two different positions) enables checking whether the component is subjected to the same type of wear or to differential wear when it is installed in different positions.

The position code PSTN is, in general, also used for all the (generally small) components that can be installed on the packing machine 6 in incorrect positions, for example by (erroneously) exchanging the position of two components. For example, a panel intended to stay on the left of a path could be (erroneously) installed on the right and vice versa.

The position code PSTN is not generally used (i.e. it is ignored) for all the components that can only be installed on the packing machine 6 in a single position and (due to their size and/or shape) cannot be (erroneously) installed in a wrong position (i.e. in a position other than the correct position, which is the predetermined nominal position). For example, each wrapping wheel of the packing machine 6 can normally only be installed in one position and therefore there is no possibility of a wrapping wheel of the packing machine 6 being installed in a different position from that planned (i.e. from the predetermined nominal position); furthermore, it is not possible for a wrapping wheel to be installed in the wrong position as it is generally physically impossible to install a wrapping wheel in a different position from that planned.

According to one possible embodiment, the position of a given component is "*manually*" entered by an operator (normally, the operator who installed the component on the packing machine 6); in other words, after installing the component on the packing machine 6, the operator communicates the actual position of the component to the control unit 14 (generally via the user interface device 15) and the control unit 14 writes this position in the memory 17 of the corresponding transponder 16 (in particular, in the position code PSTN contained in the memory 17). Obviously, this operation is only performed for components that could be installed on the packing machine 6 in different or incorrect positions. In this case, at the end of an operator's intervention, the control unit 14 could automatically determine the presence of a new component through the corresponding transponder 16 and, if the information is considered useful, could request the operator to enter the actual position of the component in the packing machine 6 before enabling the starting of the packing machine 6.

According to a different embodiment shown in Figure 12, the position of some components in the packing machine 6 is not "*manually*" entered by an operator, but is automatically determined by an electronic localization system 34 connected to the control unit 14.

The localization system 34 comprises a plurality of marker elements 35 that are coupled (fixed) to corresponding components for which it is wished to determine the actual position (which is only different from the predetermined nominal position in the case of error) inside the packing machine 6. In addition, the localization system 34 comprises (at least) one interrogation device 36 that is placed in a fixed position, is connected to the control unit 14, and is designed to determine an actual position of each marker element 35, i.e. an actual position of the component provided with the marker element 35. The interrogation device 36 comprises antennas that are generally small (unlike the antenna 21 of the transmission device 20) and that, if necessary, can be connected to the protection casing 22 of the packing machine 6 in a similarly manner to the antenna 21 of the transmission device 20.

According to a preferred embodiment, the control unit 14 stores the actual position of a component provided with a marker element 35 in its memory and, at the same time, writes the actual position of the component provided with the marker element 35 in the memory 17 of the corresponding transponder 16 (i.e. in the position code PSTN contained in the memory 17). All of this takes place automatically, as the actual position of components provided with marker elements 35 (i.e. components for which it is effectively useful to determine the actual position) is determined by the control unit 14 using the localization system 34 and therefore without the need for operation intervention.

According to a preferred embodiment, the control unit 14 checks whether the actual position of each component provided with a marker element 35 corresponds to a desired position for the component (i.e. whether or not the actual position is the same as the desired position); in consequence, the control unit 14 generates an error signal if the actual position of a component provided with a marker element 35 does not correspond to the desired position of the component. In this way, the control unit 14 is able to autonomously determine whether there are any improperly positioned components.

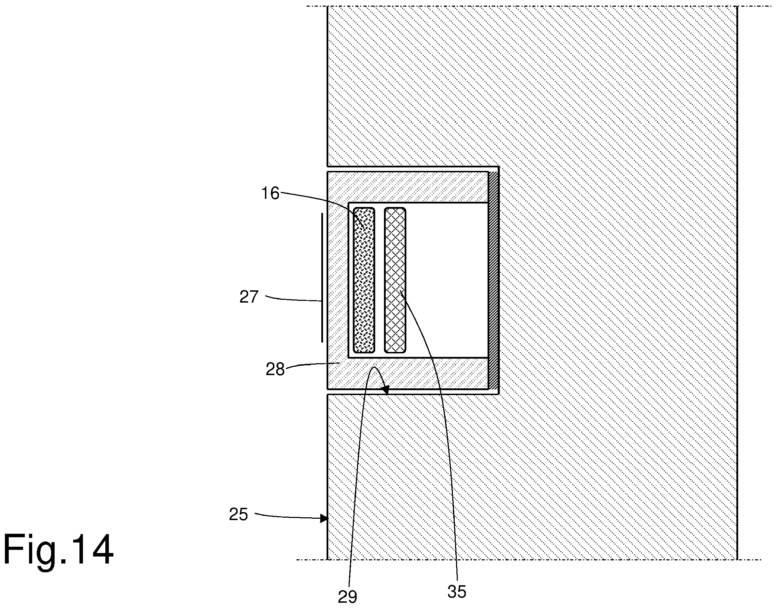

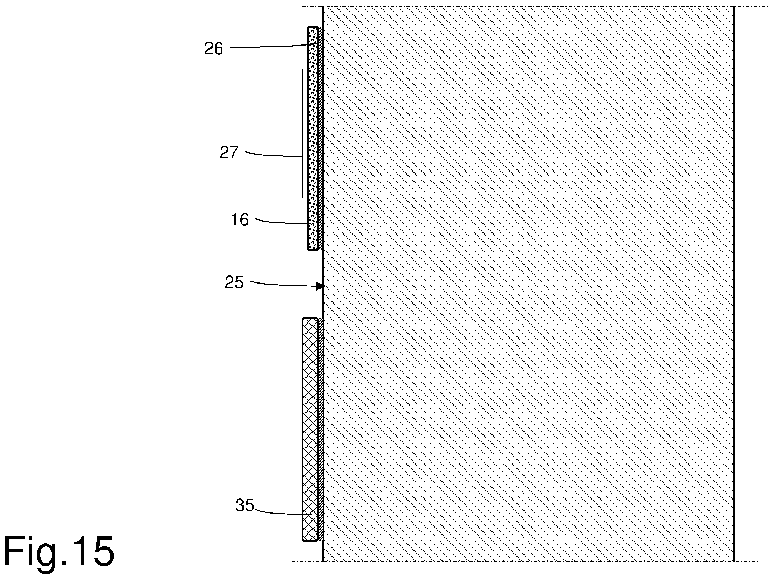

According to a possible, but not limitative embodiment shown in Figure 14, each marker element 35 is arranged together with the corresponding transponder 16 on a single shared support; for example each marker element 35 is arranged in the same container 28 that contains the transponder 16 associated with the same component. Alternatively, and as shown in Figure 15, in a same component the marker element 35 is completely independent of the transponder 16, i.e. the marker element 35 is fixed to the component at a certain distance from and independently of the transponder 16

According to a preferred, but not limitative embodiment, the localization system 34 uses "*Ultra Wide Band*" (UWB) technology to implement communications between the marker element 35 and the interrogation device 36; UWB technology derives its name from the ability to exploit a wide range of frequencies, ranging between 3.1 and 10 gigahertz and thus with a bandwidth of approximately 7 gigahertz. Invented and designed for short-distance data exchange, UWB technology bases its operation on the exchange of digital pulses between source and receivers at extremely regular time intervals. What makes the difference between UWB technology and other wireless data exchange technologies is substantially the timing: the synchronization between the node that sends the signal and the nodes that receive it must have an accuracy of a few trillionths of a second; in consequence, UWB systems are able to measure the "*transit time*" of information with extreme precision, and this enables calculating the distance that separates the antenna that transmits the signal from the antenna that receives it with a margin of centimetres (if not millimetres). Furthermore, UWB technology is virtually indistinguishable from so-called "*background noise*"*:* in fact, signal power is always very low at all the frequencies used by UWB technology, (current usage is limited to a few tenths of a watt); in consequence, UWB technology does not interfere in any way with data transmissions between the transmission device 20 and the transponders 16, and does not suffer interference from data transmissions between transmission device 20 and the transponders 16. In this way, the localization system 34 can coexist with the transmission devices 18 and 20 without any problems.

It is important to note that the localization system 34 is not normally always active (the components do not change their position without operator intervention, which is only possible when the packing machine 6 is stopped), but is activated only when needed, i.e. only when the configuration of the packing machine 6 might have been changed; for example, the localization system 34 could be activated for a brief moment every time the packing machine 6 is restarted after a machine stop during which the protection casing 22 was at least partially open. In consequence, when the localization system 34 is activated, communication between the control unit 14 and the transponders 16 could be temporarily interrupted as a precaution.

According to one possible embodiment, transponders 16 and/or marker elements 35 could also be associated with tools and equipment used to carry out technical operations on the packing machine 6; in this way, the control unit 14 can check, before starting the packing machine 6, that no tools or equipment have been "*forgotten*" inside packing machine 6.

According to a preferred embodiment, the control unit 14 signals the need for a cleaning/maintenance/overhaul/replacement operation on a component of the processing line 8 depending on the data stored in the memory 17 of the corresponding transponder 16. To determine the need for a cleaning/maintenance/overhaul/replacement operation on a component, the control unit 14 takes into account all the data contained in the memory 17 of the corresponding transponder 16 and related to the events of the corresponding component's operating life; obviously, greater importance is given to the use counter UC indicating the actual working time (normally measured in hours) of the corresponding component, but all the other data is also taken into due account in cases where the component has been less stressed or more stressed than average.

According to one possible embodiment, the control unit 14 cyclically reads some or all of the data contained in the memories 17 of all the transponders 16, stores this data in a local mass storage device (typically a hard disk or a solid-state memory), and also transmits this data to a remote server of the manufacturer of the automatic machine 6. In this way, by collecting the data originating from all the automatic machines 6 installed worldwide, the manufacturer of the automatic machine 6 can perform largescale statistical processing that enables optimizing predictive maintenance of the automatic machines 6 (predictive maintenance is a type of preventive maintenance that is carried out following the identification of one or more parameters that are measured and extrapolated using appropriate mathematical models in order to identify the residual time before a fault). Furthermore, in this way, the manufacturer of the automatic machine 6 can know the actual composition of each automatic machine 6 installed around the world in real time, i.e. know exactly all the components that are currently installed (and therefore operating) on each automatic machine 6 installed around the world, and therefore be able to program the production of spare parts with greater confidence and also check that all the components that are currently installed (and therefore operating) on each automatic machine 6 installed around the world are completely compatible with one another (not so much as components in themselves, but rather the versions of the components; for example, version X of a component might not be fully compatible with version Y of another component).

In the embodiment shown in the accompanying figures, the automatic machine 6 is a packing machine that produces packets of cigarettes 1; according to other perfectly equivalent embodiments that are not shown, the automatic machine 6 could be a cigarette making machine, a cigarette filter making machine, a packing machine that applies a transparent outer wrapper to cigarette packs, a packing machine that produces cartons of cigarette packs, a cartoning machine, a packing machine that produces foodstuff packages, a sanitary towels making machine, a packing machine for sanitary towels, etc. In other words, the products processed by the packing machine are constituted by smoking, sanitary, foodstuff, or pharmaceutical products.

The above-described automatic machine 6 has numerous advantages.

First of all, the above-described automatic machine 6 enables programming the maintenance of all its components in an extremely precise and reliable manner, independently of whether some components are installed on and/or removed from the automatic machine 6 at each format change.

Furthermore, the above-described automatic machine 6 is simple and inexpensive to manufacture as it uses low-cost and readily available commercial components (the transponders 16 constituted by passive transponders for example).

## Claims

1. An automatic machine (6) for the production or packaging of smoking, sanitary, foodstuff, or pharmaceutical products; the automatic machine (6) comprises:
at least one processing line (8), along which the products are processed;
a plurality of components, which are distributed along the processing line (8) so as to make up the processing line (8) ;
at least one transponder (16), which is mounted on a corresponding component, comprises a programmable memory (17) designed to contain solely a series of data of the component, and comprises a first transmission device (18), which is designed to send and receive the data contained in the programmable memory (17);
a second transmission device (20), which is designed to communicate with the first transmission device (18); and
a control unit (14), configured to control the operation of the automatic machine (6) and is connected to the second transmission device (20);
wherein the memory (17) of the transponder (16) contains a univocal identifying code (IDC) of the corresponding component; and
wherein a nominal operating speed is provided, which represents the maximum operating speed that can be reached by the processing line (8);
the automatic machine is **characterized in that:**
the memory (17) of the transponder (16) contains a record of events of the operating life of the corresponding component; the control unit (14) is designed to change, through the second transmission device (20), the content of the memory (17) of the transponder (16) so as to update the events of the operating life of the corresponding component; and
the memory (17) of the transponder (16) contains a plurality of use counters (UC10-UC100) indicating the actual working time of the corresponding component at different operating speeds ranging from zero to the nominal operating speed.

2. The automatic machine (6) according to claim 1, wherein:
the memory (17) of the transponder (16) contains an additional use counter (UC) indicating the actual working time of the corresponding component; and
the control unit (14) is configured to cyclically change, when the processing line (8) is working to process the products, the content of the memory (17) of the transponder (16) so as to increase the additional use counter (UC) of the corresponding component

3. The automatic machine (6) according to claim 1 or 2, wherein:
the control unit (14) is designed to determine an actual operating speed at which the processing line (8) is working;
the memory (17) of the transponder (16) contains a first equivalent use counter (UCeqv1); and
the control unit (14) is configured to increase the first equivalent use counter (UCeqv1) of the corresponding component by a quantity that depends on the elapsed amount of time and on the ratio between the actual operating speed and the nominal operating speed.

4. The automatic machine (6) according to claim 3, wherein the control unit (14) is configured to determine a wear factor depending on the actual operating speed and is configured to increase the first equivalent use counter (UCeqv1) of the corresponding component by a quantity that is equal to the product of the elapsed amount of time and the wear factor.

5. The automatic machine (6) according to one of the claims from 1 to 4, wherein the control unit (14) is configured to determine the need for a cleaning / maintenance / overhaul / replacement operation to be carried out on a component of the processing line (8) depending on the data stored in the memory (17) of the corresponding transponder (16).

6. The automatic machine (6) according to one of the claims from 1 to 5, wherein:
at least one sensor (32, 33) is provided, which is designed to measure a physical quantity correlated with the stresses to which the corresponding component is subjected;
the memory (17) of the transponder (16) contains at least one stress datum (Tmin, Tmax, Tavg, Smin, Smax, Savg), which is correlated with the physical quantity measured by the sensor (32, 33); and
the control unit (14) is configured to cyclically read the sensor (32, 33) and, if necessary, updates the stress datum (Tmin, Tmax, Tavg, Smin, Smax, Savg) of the memory (17) of the transponder (16) .

7. The automatic machine (6) according to claim 6, wherein the memory (17) of the transponder (16) contains a plurality of stress counters (SC10-SC100) indicating the actual working time of the corresponding component at different values taken by the physical quantity measured by the sensor (32, 33).

8. The automatic machine (6) according to one of the claims from 1 to 7, wherein:
the memory (17) of the transponder (16) contains at least one configuration parameter (CF1-CF5) of the corresponding component; and
the control unit (14) is configured to read, from the memory (17) of the transponder (16), an optimized value of the configuration parameter (CF1-CF5) of the corresponding component and is configured to use the optimized value to control the component or to display the optimized values for manual set-up of the components.

9. The automatic machine (6) according to one of the claims from 1 to 8, wherein:
the memory (17) of the transponder (16) contains a first installation date (DTM) of the corresponding component in the automatic machine (6); and
the control unit (14) is configured to write the first installation date (DTM) in the memory (17) of the transponder (16) when the corresponding component is installed for the first time in the automatic machine (6).

10. The automatic machine (6) according to one of the claims from 1 to 9, wherein:
the memory (17) of the transponder (16) contains a univocal identifying code (IDCM) of the automatic machine (6); and
the control unit (14) is configured to write the univocal identifying code (IDCM) of the automatic machine (6) in the memory (17) of the transponder (16) when the corresponding component is installed for the first time in the automatic machine (6).

11. The automatic machine (6) according to one of the claims from 1 to 10, wherein the memory (17) of the transponder (16) contains a last overhaul date (DTO).

12. The automatic machine (6) according to one of the claims from 1 to 11, wherein the memory (17) of the transponder (16) contains a code (VS) indicating the version of the corresponding component.

13. The automatic machine (6) according to one of the claims from 1 to 12, wherein the memory (17) of the transponder (16) contains a position code (PSTN), which indicates the position of the corresponding component inside the automatic machine (6).

14. The automatic machine (6) according to one of the claims from 1 to 13, wherein:
it is provided a plastic material container (28), which is rigidly connected to the component and internally houses the transponder (16);
the component has a blind hole (29) where the container (28) is inserted so as to partially protrude from the blind hole (29); and
the transponder (16) is arranged in a part of the container (28) that protrudes from the blind hole (29).

15. The automatic machine (6) according to one of the claims from 1 to 14 and comprising a plastic material container (28), which is rigidly connected to the component, internally houses the transponder (16), and houses also at least one metal material body (31) arranged close to the transponder (16) .

16. A method to control an automatic machine (6) for the production or packaging of smoking, sanitary, foodstuff, or pharmaceutical products;
the automatic machine (6) comprises: at least one processing line (8), along which the products are processed, a plurality of components, which are distributed along the processing line (8) so as to make up the processing line (8), and a control unit (14), which controls the operation of the automatic machine (6);
the control method comprises the step of associating at least one component with a transponder (16), which is mounted on the component, comprises a programmable memory (17) designed to contain solely a series of data of the component, and comprises a first transmission device (18), which is designed to send and receive the data contained in the programmable memory (17);
wherein the data contained in the memory (17) of the transponder (16) comprise a univocal identifying code (IDC) of the corresponding component;
wherein a second transmission device (20) is provided, which is designed to communicate with the first transmission device (18) and is connected to the control unit (14); and wherein a nominal operating speed is provided, which represents the maximum operating speed that can be reached by the processing line (8);
the control method is **characterized in that:**
the memory (17) of the transponder (16) contains a record of events of the operating life of the corresponding component;
the control method comprises the further step of changing, by means of the control unit (14) and through the second transmission device (20), the content of the memory (17) of the transponder (16) so as to update the events of the operating life of the corresponding component; and
the memory (17) of the transponder (16) contains a plurality of use counters (UC10-UC100) indicating the actual working time of the corresponding component at different operating speeds ranging from zero to the nominal operating speed.

## Patentansprüche

1. Automatische Anlage (6) für die Produktion oder Verpackung von Rauch-, Sanitär-, Lebensmittel- oder Pharmazieprodukten; wobei die automatische Anlage (6) umfasst:
wenigstens eine Verarbeitungslinie (8), längs der die Produkte verarbeitet werden;
mehrere Komponenten, die längs der Verarbeitungslinie (8) verteilt sind, um die Verarbeitungslinie (8) zu bilden;
wenigstens einen Transponder (16), der an einer entsprechenden Komponente montiert ist, der einen programmierbaren Speicher (17) umfasst, der so ausgelegt ist, lediglich eine Reihe von Daten der Komponente zu enthalten, und der eine erste Übertragungsvorrichtung (18) umfasst, die ausgelegt ist, die in dem programmierbaren Speicher (17) enthaltenen Daten zu senden und zu empfangen;
eine zweite Übertragungsvorrichtung (20), die ausgelegt ist, mit der ersten Übertragungsvorrichtung (18) zu kommunizieren; und
eine Steuereinheit (14), die konfiguriert ist, den Betrieb der automatischen Anlage (6) zu steuern, und die mit der zweiten Übertragungsvorrichtung (20) verbunden ist;
wobei der Speicher (17) des Transponders (16) einen eindeutigen Identifikationscode (IDC) der entsprechenden Komponente enthält; und
wobei eine nominelle Betriebsgeschwindigkeit vorgesehen ist, die die maximale Betriebsgeschwindigkeit darstellt, die von der Verarbeitungslinie (8) erreicht werden kann;
wobei die automatische Anlage **dadurch gekennzeichnet ist, dass**:
der Speicher (17) des Transponders (16) eine Aufzeichnung von Ereignissen der Betriebszeit der entsprechenden Komponente enthält; wobei die Steuereinheit (14) ausgelegt ist, durch die zweite Übertragungsvorrichtung (20) den Inhalt des Speichers (17) des Transponders (16) zu ändern, um die Ereignisse der Betriebszeit der entsprechenden Komponente zu aktualisieren; und
der Speicher (17) des Transponders (16) mehrere Nutzungszähler (UC10-UC100) enthält, die die tatsächliche Arbeitszeit der entsprechenden Komponente bei unterschiedlichen Betriebsgeschwindigkeiten, die von null bis zur nominellen Betriebsgeschwindigkeit reichen, angeben.

2. Automatische Anlage (6) nach Anspruch 1, wobei:
der Speicher (17) des Transponders (16) einen zusätzlichen Nutzungszähler (UC) enthält, der die tatsächliche Arbeitszeit der entsprechenden Komponente angibt; und
die Steuereinheit (14) konfiguriert ist, den Inhalt des Speichers (17) des Transponders (16) zyklisch zu ändern, wenn die Verarbeitungslinie (8) arbeitet, um die Produkte zu verarbeiten, um den zusätzlichen Nutzungszähler (UC) der entsprechenden Komponente zu erhöhen.

3. Automatische Anlage (6) nach Anspruch 1 oder 2, wobei:
die Steuereinheit (14) ausgelegt ist, eine tatsächliche Betriebsgeschwindigkeit zu ermitteln, mit der die Verarbeitungslinie (8) arbeitet;
der Speicher (17) des Transponders (16) einen ersten Äquivalentnutzungszähler (UCeqv1) enthält; und
die Steuereinheit (14) konfiguriert ist, den ersten Äquivalentnutzungszähler (UCeqv1) der entsprechenden Komponente um einen Betrag zu erhöhen, der von der verstrichenen Zeit und von dem Verhältnis zwischen der tatsächlichen Betriebsgeschwindigkeit und der nominellen Betriebsgeschwindigkeit abhängt.

4. Automatische Anlage (6) nach Anspruch 3, wobei die Steuereinheit (14) konfiguriert ist, einen Verschleißfaktor abhängig von der tatsächlichen Betriebsgeschwindigkeit zu ermitteln, und konfiguriert ist, den ersten Äquivalentnutzungszähler (UCeqv1) der entsprechenden Komponente um einen Betrag zu erhöhen, der gleich dem Produkt aus der verstrichenen Zeit und dem Verschleißfaktor ist.

5. Automatische Anlage (6) nach einem der Ansprüche 1 bis 4, wobei die Steuereinheit (14) konfiguriert ist, den Bedarf an einem Reinigungs-, Wartungs-, Überholungs- oder Auswechselbetrieb, der bei einer Komponente der Verarbeitungslinie (8) durchgeführt werden soll, abhängig von den Daten, die im Speicher (17) des entsprechenden Transponders (16) gespeichert sind, zu ermitteln.

6. Automatische Anlage (6) nach einem der Ansprüche 1 bis 5, wobei:
wenigstens ein Sensor (32, 33) vorgesehen ist, der ausgelegt ist, eine physikalische Größe zu messen, die mit den Belastungen korreliert, denen die entsprechende Komponente ausgesetzt ist;
der Speicher (17) des Transponders (16) wenigstens einen Belastungswert (Tmin, Tmax, Tavg, Smin, Smax, Savg) enthält, der mit der durch den Sensor (32, 33) gemessenen physikalischen Größe korreliert; und
die Steuereinheit (14) konfiguriert ist, den Sensor (32, 33) zyklisch auszulesen, und die den Belastungswert (Tmin, Tmax, Tavg, Smin, Smax, Savg) des Speichers (17) des Transponders (16) bei Bedarf aktualisiert.

7. Automatische Anlage (6) nach Anspruch 6, wobei der Speicher (17) des Transponders (16) mehrere Belastungszähler (SC10-SC100) enthält, die die tatsächliche Arbeitszeit der entsprechenden Komponente bei verschiedenen Werten der durch den Sensor (32, 33) gemessenen physikalischen Größe angibt.

8. Automatische Anlage (6) nach einem der Ansprüche 1 bis 7, wobei:
der Speicher (17) des Transponders (16) wenigstens einen Konfigurationsparameter (CF1-CF5) der entsprechenden Komponente enthält; und
die Steuereinheit (14) konfiguriert ist, aus dem Speicher (17) des Transponders (16) einen optimierten Wert des Konfigurationsparameters (CF1-CF5) der entsprechenden Komponente auszulesen, und konfiguriert ist, den optimierten Wert zu verwenden, um die Komponente zu steuern, oder um die optimierten Werte für eine manuelle Einstellung der Komponenten anzuzeigen.

9. Automatische Anlage (6) nach einem der Ansprüche 1 bis 8, wobei:
der Speicher (17) des Transponders (16) ein Erstinstallationsdatum (DTM) der entsprechenden Komponente in der automatischen Anlage (6) enthält; und
die Steuereinheit (14) konfiguriert ist, das Erstinstallationsdatum (DTM) in den Speicher (17) des Transponders (16) zu schreiben, wenn die entsprechende Komponente erstmalig in der automatischen Anlage (6) installiert wird.

10. Automatische Anlage (6) nach einem der Ansprüche 1 bis 9, wobei:
der Speicher (17) des Transponders (16) einen eindeutigen Identifikationscode (IDCM) der automatischen Anlage (6) enthält; und wobei die Steuereinheit (14) konfiguriert ist, den eindeutigen Identifikationscode (IDCM) der automatischen Anlage (6) in den Speicher (17) des Transponders (16) zu schreiben, wenn die entsprechende Komponente erstmalig in der automatischen Anlage (6) installiert wird.

11. Automatische Anlage (6) nach einem der Ansprüche 1 bis 10, wobei der Speicher (17) des Transponders (16) ein Datum (DTO) der letzten Überholung enthält.

12. Automatische Anlage (6) nach einem der Ansprüche 1 bis 11, wobei der Speicher (17) des Transponders (16) einen Code (VS) enthält, der die Version der entsprechenden Komponente angibt.

13. Automatische Anlage (6) nach einem der Ansprüche 1 bis 12, wobei der Speicher (17) des Transponders (16) einen Positionscode (PSTN) enthält, der die Position der entsprechenden Komponente im Inneren der automatischen Anlage (6) angibt.

14. Automatische Anlage (6) nach einem der Ansprüche 1 bis 13, wobei:
ein Behälter (28) aus Kunststoffmaterial vorgesehen ist, der mit der Komponente starr verbunden ist und im Inneren den Transponder (16) aufnimmt;
die Komponente ein Blindloch (29) hat, in das der Behälter (28) so eingesetzt wird, dass er aus dem Blindloch (29) teilweise vorsteht; und
der Transponder (16) in einem Teil des Behälters (28) angeordnet ist, der vom Blindloch (29) vorsteht.

15. Automatische Anlage (6) nach einem der Ansprüche 1 bis 14, und umfassend einen Behälter (28) aus Kunststoffmaterial, der mit der Komponente starr verbunden ist, der im Inneren den Transponder (16) aufnimmt und außerdem wenigstens einen Körper (31) aus Metallmaterial aufnimmt, der direkt am Transponder (16) angeordnet ist.

16. Verfahren zum Steuern einer automatischen Anlage (6) für die Produktion oder Verpackung von Rauch-, Sanitär-, Lebensmittel- oder Pharmazieprodukten;
wobei die automatische Anlage (6) umfasst: wenigstens eine Verarbeitungslinie (8), längs der die Produkte verarbeitet werden, mehrere Komponenten, die längs der Verarbeitungslinie (8) verteilt sind, um die Verarbeitungslinie (8) zu bilden, und eine Steuereinheit (14), die den Betrieb der automatischen Anlage (6) steuert;
wobei das Steuerverfahren den Schritt des Zuordnens von wenigstens einer Komponente zu einem Transponder umfasst, der an der Komponente montiert ist, einen programmierbaren Speicher (17) umfasst, der so ausgelegt ist, lediglich eine Reihe von Daten der Komponente zu enthalten, und der eine erste Übertragungsvorrichtung (18) umfasst, die ausgelegt ist, die im programmierbaren Speicher (17) enthaltenen Daten zu senden und zu empfangen;
wobei die im Speicher (17) des Transponders (16) enthaltenen Daten einen eindeutigen Identifikationscode (IDC) der entsprechenden Komponente umfassen;
wobei eine zweite Übertragungsvorrichtung (20) vorgesehen ist, die ausgelegt ist, mit der ersten Übertragungsvorrichtung (18) zu kommunizieren, und die mit der Steuereinheit (14) verbunden ist; und
wobei eine nominelle Betriebsgeschwindigkeit vorgesehen ist, die die maximale Betriebsgeschwindigkeit darstellt, die durch die Verarbeitungslinie (8) erreicht werden kann;
wobei das Steuerverfahren **dadurch gekennzeichnet ist, dass**:
der Speicher (17) des Transponders (16) eine Aufzeichnung von Ereignissen der Betriebszeit der entsprechenden Komponente enthält;
wobei das Steuerverfahren den weiteren Schritt des Änderns des Inhalts des Speichers (17) des Transponders (16) mittels der Steuereinheit (14) und durch die zweite Übertragungsvorrichtung (20) umfasst, um die Ereignisse der Betriebszeit der entsprechenden Komponente zu aktualisieren; und
der Speicher (17) des Transponders (16) mehrere Nutzungszähler (UC10-UC100) enthält, die die tatsächliche Arbeitszeit der entsprechenden Komponente bei verschiedenen Betriebsgeschwindigkeiten, die von null bis zur nominellen Betriebsgeschwindigkeit reichen,
angeben.

## Revendications

1. Machine automatique (6) pour la production ou l'emballage de produits à fumer, hygiéniques, alimentaires ou pharmaceutiques ; la machine automatique (6) comprend :
au moins une ligne de traitement (8), le long de laquelle les produits sont traités ;
une pluralité de composants, qui sont répartis le long de la ligne de traitement (8) de façon à constituer la ligne de traitement (8) ;
au moins un transpondeur (16), qui est monté sur un composant correspondant, comprend une mémoire programmable (17) conçue pour contenir uniquement une série de données du composant, et comprend un premier dispositif de transmission (18), qui est conçu pour envoyer et recevoir les données contenues dans la mémoire programmable (17) ;
un second dispositif de transmission (20), qui est conçu pour communiquer avec le premier dispositif de transmission (18) ; et
une unité de commande (14), configurée pour commander le fonctionnement de la machine automatique (6) et est connectée au second dispositif de transmission (20) ;
dans laquelle la mémoire (17) du transpondeur (16) contient un code d'identification (IDC) univoque du composant correspondant ; et
dans laquelle une vitesse de service nominale est prévue, qui représente la vitesse de service maximale qui peut être atteinte par la ligne de traitement (8) ;
la machine automatique est **caractérisée en ce que** :
la mémoire (17) du transpondeur (16) contient un enregistrement d'événements de la durée de service du composant correspondant ;
l'unité de commande (14) est conçue pour changer, par le biais du second dispositif de transmission (20), le contenu de la mémoire (17) du transpondeur (16) de façon à mettre à jour les événements de la durée de service du composant correspondant ; et
la mémoire (17) du transpondeur (16) contient une pluralité de compteurs d'utilisation (UC10 à UC100) indiquant le temps de travail réel du composant correspondant à des vitesses de service différentes allant de zéro à la vitesse de service nominale.

2. Machine automatique (6) selon la revendication 1, dans laquelle :
la mémoire (17) du transpondeur (16) contient un compteur d'utilisation (UC) supplémentaire indiquant le temps de travail réel du composant correspondant ; et
l'unité de commande (14) est configurée pour changer de façon cyclique, lorsque la ligne de traitement (8) travaille pour traiter les produits, le contenu de la mémoire (17) du transpondeur (16) de façon à augmenter le compteur d'utilisation (UC) supplémentaire du composant correspondant.

3. Machine automatique (6) selon la revendication 1 ou 2, dans laquelle :
l'unité de commande (14) est conçue pour déterminer une vitesse de service réelle à laquelle la ligne de traitement (8) travaille ;
la mémoire (17) du transpondeur (16) contient un premier compteur d'utilisation équivalente (UCeqv1) ; et
l'unité de commande (14) est configurée pour augmenter le premier compteur d'utilisation équivalente (UCeqv1) du composant correspondant d'une grandeur qui dépend de la durée écoulée et du rapport entre la vitesse de service réelle et la vitesse de service nominale.

4. Machine automatique (6) selon la revendication 3, dans laquelle l'unité de commande (14) est configurée pour déterminer un facteur d'usure en fonction de la vitesse de service réelle et est configurée pour augmenter le premier compteur d'utilisation équivalente (UCeqv1) du composant correspondant d'une grandeur qui est égale au produit de la durée écoulée et du facteur d'usure.

5. Machine automatique (6) selon l'une des revendications 1 à 4, dans laquelle l'unité de commande (14) est configurée pour déterminer le besoin d'une opération de nettoyage/entretien/révision/remplacement à réaliser sur un composant de la ligne de traitement (8) en fonction des données stockées dans la mémoire (17) du transpondeur (16) correspondant.

6. Machine automatique (6) selon l'une des revendications 1 à 5, dans laquelle :
au moins un capteur (32, 33) est prévu, qui est conçu pour mesurer une grandeur physique corrélée aux contraintes auxquelles le composant correspondant est soumis ;
la mémoire (17) du transpondeur (16) contient au moins une donnée de contrainte (Tmin, Tmax, Tavg, Smin, Smax, Savg), qui est corrélée à la grandeur physique mesurée par le capteur (32, 33) ; et
l'unité de commande (14) est configurée pour lire de façon cyclique le capteur (32, 33) et, si nécessaire, mettre à jour la donnée de contrainte (Tmin, Tmax, Tavg, Smin, Smax, Savg) de la mémoire (17) du transpondeur (16).

7. Machine automatique (6) selon la revendication 6, dans laquelle la mémoire (17) du transpondeur (16) contient une pluralité de compteurs de contrainte (SC10 à SC100) indiquant le temps de travail réel du composant correspondant à des valeurs différentes prises par la grandeur physique mesurée par le capteur (32, 33).

8. Machine automatique (6) selon l'une des revendications 1 à 7, dans laquelle :
la mémoire (17) du transpondeur (16) contient au moins un paramètre de configuration (CF1 à CF5) du composant correspondant ; et
l'unité de commande (14) est configurée pour lire, à partir de la mémoire (17) du transpondeur (16), une valeur optimisée du paramètre de configuration (CF1 à CF5) du composant correspondant et est configurée pour utiliser la valeur optimisée afin de commander le composant ou pour afficher les valeurs optimisées pour le réglage manuel des composants.

9. Machine automatique (6) selon l'une des revendications 1 à 8, dans laquelle :
la mémoire (17) du transpondeur (16) contient une première date d'installation (DTM) du composant correspondant dans la machine automatique (6) ; et
l'unité de commande (14) est configurée pour écrire la première date d'installation (DTM) dans la mémoire (17) du transpondeur (16) lorsque le composant correspondant est installé la première fois dans la machine automatique (6).

10. Machine automatique (6) selon l'une des revendications 1 à 9, dans laquelle :
la mémoire (17) du transpondeur (16) contient un code d'identification (IDCM) univoque de la machine automatique (6) ; et
l'unité de commande (14) est configurée pour écrire le code d'identification (IDCM) univoque de la machine automatique (6) dans la mémoire (17) du transpondeur (16) lorsque le composant correspondant est installé la première fois dans la machine automatique (6).

11. Machine automatique (6) selon l'une des revendications 1 à 10, dans laquelle la mémoire (17) du transpondeur (16) contient une date de dernière révision (DTO).

12. Machine automatique (6) selon l'une des revendications 1 à 11, dans laquelle la mémoire (17) du transpondeur (16) contient un code (VS) indiquant la version du composant correspondant.

13. Machine automatique (6) selon l'une des revendications 1 à 12, dans laquelle la mémoire (17) du transpondeur (16) contient un code de position (PSTN), qui indique la position du composant correspondant à l'intérieur de la machine automatique (6).

14. Machine automatique (6) selon l'une des revendications 1 à 13, dans laquelle :
il est prévu un contenant en matériau plastique (28), qui est raccordé rigidement au composant et loge à l'intérieur le transpondeur (16) ;
le composant a un trou borgne (29) où le contenant (28) est inséré de façon à faire saillie partiellement du trou borgne (29) ; et
le transpondeur (16) est agencé dans une partie du contenant (28) qui fait saillie du trou borgne (29).

15. Machine automatique (6) selon l'une des revendications 1 à 14 et comprenant un contenant en matériau plastique (28), qui est raccordé rigidement au composant, loge à l'intérieur le transpondeur (16), et loge également au moins un corps en matériau métallique (31) agencé proche du transpondeur (16).

16. Procédé de commande d'une machine automatique (6) pour la production ou l'emballage de produits à fumer, hygiéniques, alimentaires ou pharmaceutiques ;
la machine automatique (6) comprend :
au moins une ligne de traitement (8), le long de laquelle les produits sont traités, une pluralité de composants, qui sont répartis le long de la ligne de traitement (8) de façon à constituer la ligne de traitement (8), et une unité de commande (14), qui commande le fonctionnement de la machine automatique (6) ;
le procédé de commande comprend l'étape d'association d'au moins un composant à un transpondeur (16), qui est monté sur le composant, comprend une mémoire programmable (17) conçue pour contenir uniquement une série de données du composant, et comprend un premier dispositif de transmission (18), qui est conçu pour envoyer et recevoir les données contenues dans la mémoire programmable (17) ;
dans lequel les données contenues dans la mémoire (17) du transpondeur (16) comprennent un code d'identification (IDC) univoque du composant correspondant ;
dans lequel un second dispositif de transmission (20) est prévu, qui est conçu pour communiquer avec le premier dispositif de transmission (18) et est connecté à l'unité de commande (14) ; et
dans lequel une vitesse de service nominale est prévue, qui représente la vitesse de service maximale qui peut être atteinte par la ligne de traitement (8) ;
le procédé de commande est **caractérisé en ce que** :
la mémoire (17) du transpondeur (16) contient un enregistrement d'événements de la durée de service du composant correspondant ;
le procédé de commande comprend l'étape supplémentaire de changement, au moyen de l'unité de commande (14) et par le biais du second dispositif de transmission (20), du contenu de la mémoire (17) du transpondeur (16) de façon à mettre à jour les événements de la durée de service du composant correspondant ; et
la mémoire (17) du transpondeur (16) contient une pluralité de compteurs d'utilisation (UC10 à UC100) indiquant le temps de travail réel du composant correspondant à des vitesses de service différentes allant de zéro à la vitesse de service nominale.
